(19) Europäisches Patentamt
European Patent Office
Office européen des brevets

(11) **EP 4 716 049 A1**

(12) **EUROPEAN PATENT APPLICATION**

(43) Date of publication:
**25.03.2026 Bulletin 2026/13**

(21) Application number: **24315430.9**

(22) Date of filing: **23.09.2024**

(51) International Patent Classification (IPC):
**H02J 3/14** $^{(2026.01)}$    **C25B 1/04** $^{(2021.01)}$
**C25B 15/02** $^{(2021.01)}$    **H02J 13/00** $^{(2026.01)}$
**H02J 15/00** $^{(2026.01)}$

(52) Cooperative Patent Classification (CPC):
**H02J 15/50; C25B 1/04; C25B 15/02; H02J 3/14;
H02J 13/12;** H02J 2105/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **John Cockerill Hydrogen France
68700 Aspach-Michelbach (FR)**

(72) Inventors:
• **Perroy, Edouard
38100 GRENOBLE (FR)**

• **Bignand, Laure
38100 GRENOBLE (FR)**
• **Barrière, Benoit
38100 GRENOBLE (FR)**

(74) Representative: **IP Trust
2, rue de Clichy
75009 Paris (FR)**

Remarks:
Amended claims in accordance with Rule 137(2) EPC.

(54) **ELECTROLYSIS INSTALLATION COMPRISING A SUPERVISION UNIT CONFIGURED FOR IMPROVED OPERATION**

(57) The invention relates to a water electrolysis installation (P) drawing power from an electrical network (NET) and providing an hydrogen production rate, the installation (P) comprising a plurality of clusters ($C_i$). The installation (P) comprises a supervision unit (SU) defining, repetitively at successive sampling periods (k), the operating mode of the clusters ($C_i$) and a current setpoint ($x^i_k$) of each active cluster ($C_i$). The supervision unit (SU) comprises a candidate module (CM) configured to establish, during each sampling period, a candidate list (SL) consisting of all cluster pools capable of satisfying a production constraint and an optimization module (COM) configured to calculate, during each sampling period (k), for each cluster pool of the candidate list (SL), optimal current setpoints of the clusters and an associated efficiency value of said pool, the optimal current setpoints optimizing an objective function under the production constraint.

Figure 3

EP 4 716 049 A1

**Description**

**FIELD OF THE INVENTION**

The present invention generally relates to a water electrolysis installation comprising a plurality of electrolysis clusters and a supervision unit for operating the installation. The supervision unit is configured to meet a production constraint of the installation, while pursuing an efficiency objective.

**BACKGROUND OF THE INVENTION**

Gaseous hydrogen can be produced by water electrolyzers such as alkaline water electrolyzers, PEM water electrolyzers or solid oxide water electrolyzers. In such systems, hydrogen is produced in an electrolysis cell by passing a direct current through an electrolyte located between two electrodes. Unit cells are usually stacked to multiply the electrolysis reaction, and the amount of hydrogen produced is generally proportional to the DC current passing through the stack.

Large-scale and low-cost production of hydrogen using water electrolysis can be achieved in an installation connected to the electrical network (i.e. the grid) and dimensioned to reach tens of MW, hundreds of MW or even more. Such an installation may combine several independently controllable electrolysis clusters, named "clusters" in the rest of this description for simplicity of expression. Each cluster may comprise, for example, a plurality of electrolysis stacks, a transformer & rectifier unit to supply the stacks with direct current, and an electrolysis process unit to collect and separate the gas produced by the stacks.

A water electrolysis installation may be operated by a supervision unit to meet different objectives. By "operating" it is meant in the context of the present description, establishing at any given time which cluster(s) of the installation should be activated/deactivated to contribute/stop to contribute to the production of hydrogen and at which DC current setpoint(s).

In some cases, for example when the installation is connected to the grid and has access to a stable source of electrical power, the supervision unit may operate the clusters to achieve a given hydrogen production rate (e.g. Kg of hydrogen per hour of production). In such cases, it is advantageous to configure the installation to achieve this given hydrogen production rate while minimizing the electrical active power drawn by the installation from the grid.

In other cases, for example when the installation is connected to renewable energy source that may not be stable in time, the supervision unit may operate the clusters to consume all the available electrical active power provided by the energy source. In such cases, it is advantageous to configure the installation to benefit from the available active electrical power while maximizing the hydrogen production rate.

More generally, the supervision unit may be operated to satisfy a production constraint (achieve a given hydrogen production rate, consume all of the available electrical active power) while optimizing an efficiency objective (minimize power, maximize hydrogen production rate).

A typical strategy employed by a supervision unit to meet the production constraint over time is to activate/-deactivate the smallest number of clusters that match the production constraint as closely as possible. This often results in all but one cluster operating at its maximum production capacity, i.e. at a maximum current setpoint. Another strategy is to activate all available clusters and distribute the load equally between them.

However, none of these "ad hoc" strategies, that are quite simple to implement algorithmically speaking, is satisfactory in terms of optimizing the efficiency objective. This is because not all clusters in an installation have the same characteristics, and these characteristics can change over time (live degradation). For example, clusters may exhibit different polarization curves (the relationship between the cluster voltage and the DC current applied) or different Faraday efficiencies (the relationship between the current consumed by the stack and the actual H2 production rate). In addition, the production constraint may also' change overtime, which affect the optimal setpoint of the installation.

Attempts to develop more sophisticated strategies that take into account the characteristics of the clusters and other operation constraints of the installation have led to complex optimization problems requiring dedicated numerical solvers. Such attempts have been hampered by the necessarily limited processing capacity of the supervision unit, which has to operate the installation in real time.

**OBJECT OF THE INVENTION**

In this context, there is a need to provide a supervision unit of a water electrolysis installation capable of operating in real time the electrolysis clusters of the installation to efficiently satisfy a production constraint, taking into account the characteristics of the clusters and other operational constraints of the installation.

## SUMMARY OF THE INVENTION

To this effect, the invention relates to a water electrolysis installation drawing power from an electrical network and providing an hydrogen production rate, the installation comprising a plurality of clusters, each clusters of the plurality being, at a given sampling period, either an active cluster, in a production operating mode or in a transient operating mode, which may contributes to the hydrogen production rate of the installation or an inactive cluster, in a standby operating mode or in a shutdown operating mode, which does not contribute to the hydrogen production rate of the installation.

The installation further comprises a supervision unit defining, repetitively at successive sampling periods, the operating mode of the clusters and a current setpoint of each active cluster.

According to the invention, the supervision unit comprises :

- a candidate module configured to establish, during each sampling period, a candidate list consisting of all cluster pools capable of satisfying a production constraint;
- an optimization module configured to calculate, during each sampling period, for each cluster pool of the candidate list, optimal current setpoints of the clusters and an associated efficiency value of said pool, the optimal current setpoints optimizing an objective function under the production constraint;
- a selection module configured, during each sampling period, to select among all cluster pools of the candidate list, the cluster pool presenting an optimal efficiency value ;
- an application module, the application module defining the operating mode of the clusters of the installation for the next sampling period in compliance with the selected cluster pool, and the application module defining also the respective current setpoints of the active clusters for the next sampling period as the optimal current setpoints of said selected cluster pool.

According to further non-limiting features of the invention, either taken alone or in any technically feasible combination:

- the water electrolysis installation further comprises a modelling module that identifies, for each cluster :

    o parameters of a power model that relates the power drawn by a cluster with the cluster current setpoint;
    o parameters of an efficiency model that relates an hydrogen production rate of a cluster with a cluster current setpoint;

    wherein the objective function and the production constraint are based on the parameters of the power model and on the parameters of the efficiency model;

- the objective function is a function providing a power drawn by the electrolysis clusters according to the active clusters respective current setpoints, the production constraint is a predetermined hydrogen production rate of the installation, and the supervision unit is configured to minimize the objective function.

- the objective function is a function providing a hydrogen production rate according to the active cluster respective current setpoints, the production constraint is a predetermined available power of the installation and the supervision unit is configured to maximize the objective function;

- the candidate module is configured to assess, for each cluster pool of the candidate list, the estimated power required to operate said cluster pool and to subtract the estimated power to the given available electrical power;

- the optimization module is configured to calculate, for each cluster pool of the candidate list, optimal current setpoints that also satisfy at least one primary operational constraint imposed to the cluster current setpoints;

- the optimization module is configured to calculate the optimal current setpoints according to an active set method;

- the primary operational constraint comprises operating each active cluster of a cluster pool at a current setpoint comprised between a minimum current setpoint and a maximum current set point;

- the minimum current setpoint is comprised between 20% and I 50% of the maximum current setpoint of the cluster;

- the candidate module is also configured to provide a candidate list consisting of cluster pools capable of satisfying at least one secondary operational constraint;

- the secondary operational constraint comprises activating an electrolysis cluster in standby operating mode if said electrolysis cluster is in standby operating mode for a duration equal to a maximum duration ($T_{off\_max}$);

- the candidate module is also configured to divide the candidate list in a first candidate sub-list of cluster pools, each cluster pool of the first candidate sub-list being only composed of electrolysis clusters in production operating model, and a second sub-list of cluster pools, each cluster pool of the second sub-list comprising at least one electrolysis cluster in transient operating mode;

- the optimization module is configured, for any cluster pool of the second candidate sub-list, to set the current setpoint of any clusters in transient operating mode of said cluster pool to a predefined transient setpoint or to a predefined minimum transient setpoint, and to then calculate the optimal current setpoints for the remaining clusters of said cluster pool;

- the optimization module is configured, for any cluster pool of the first candidate sub-list , to calculate the optimal current setpoints of all the clusters of said cluster pool.

## FIGURES

Many other features and advantages of the present invention will become apparent from reading the following detailed description, when considered in conjunction with the accompanying drawings, in which:

- Figure 1 illustrates a water electrolysis installation according to the invention;

- Figure 2 illustrates an electrolysis cluster of a water electrolysis installation according to the invention;

- Figure 3 illustrates the various operating modes of an electrolysis cluster;

- Figure 4 illustrates a supervision unit of a water electrolysis installation according to one embodiment.

## DETAILED DESCRIPTION OF A SPECIFIC EMBODIMENT OF THE INVENTION

Description of the water electrolysis installation

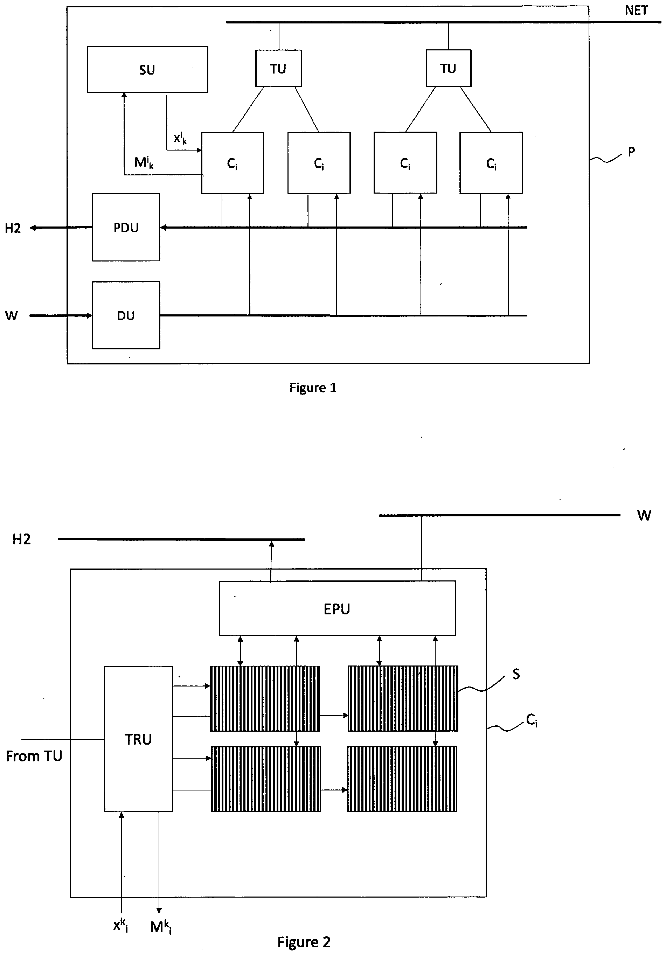

Figure 1 represents an exemplary water electrolysis installation P compatible with the present invention. The installation P is producing hydrogen H2 from feed water W.

The installation P is connected to an electrical network NET that may correspond, for instance, to a national or continental electrical grid. It may also be a local network ("micro-grid") connecting the water electrolysis installation to, for instance, a renewable power station, such as a wind farm, a photovoltaic, a hydroelectric or marine power plant.

The electrical power is typically distributed to the installation P by high voltage or medium voltage (greater than 20kV) AC transmission lines, but the invention is not limited to such a configuration and encompasses any installation powered by any type of electrical distribution.

In the installation P represented on figure 1, two transformer units TU are connected to the electrical network NET. Each transformer unit TU provides the working electrical power to a plurality of water electrolysis clusters $C_i$ to which it is connected. Transformer units TU may comprise high voltage or medium voltage (e.g. greater than 20kV) to low voltage (e.g. around 400V) transformers and switchgears as this is well known in the art. More generally, an installation P according to the invention may comprise one or more transformer unit TU or may be directly connected to a medium or low-voltage network such that a transformer unit TU is not necessary. The installation P may comprise any number n of clusters $C_i$, from 2 to tens of clusters.

The feed water W provided to the installation P is treated by a demineralization and purification unit DU to remove excessive concentration of minerals and to provide appropriate water quality in the electrolyte fed in the electrolysis stacks. The demineralization and purification unit DU may include several purifying steps, including for instance activated coal filters, reverse osmosis and electro deionization of the feed water.

The hydrogen provided by the electrolysis clusters $C_i$ are collected and treated by a purification and drying unit PDU of the installation P. The installation P may be provided with a plurality of such units, although it is usually beneficial to mutualize this treatment across the largest number of electrolysis clusters $C_i$. The purification and drying unit PDU purify the wet hydrogen exiting the electrolysis clusters $C_i$ to bring it at the required level of purity, for instance up to 99% or greater, by removal of residual oxygen and water. This can be performed by the catalytic combustion of the residual oxygen with the hydrogen, and by using absorbent beds to remove water through temperature swing adsorption for instance.

The hydrogen provided by the purification and drying unit PDU may be compressed, stored, injected into hydrogen pipeline for its distribution or used by any other means.

The installation P may comprise other mutualized auxiliaries than the purification and drying unit PDU and transformer units TU that serve the plurality of electrolysis clusters C.

The installation P combines several electrolysis clusters $C_i$ which can be operated independently of each other by a supervision unit SU. Each electrolysis cluster $C_i$ comprises at least one electrolysis stack S (4 in the example of Figure 2) which decomposes the electrolyte supplied into oxygen and hydrogen. As mentioned in the introduction, a stack S is formed by a large number of electrolysis unit cells, each cell realizing the electrochemical reaction by passing a direct current through the electrolyte located between two electrodes. To avoid any ambiguity, the term "current" in the present description refers to a direct electrical current. The expression "current setpoint" for a cluster indicates the command applied to that cluster, which is configured to adjust the direct electrical current passing through it to match this setpoint. By "operating", it is meant the selection and application of the operating mode and, possibly, of the current set point for each electrolysis cluster $C_i$ of the installation.

The unit cells and the electrolysis stack can implement any type of electrolysis, e.g. alkaline water electrolysis, PEM electrolysis or solid oxide electrolysis. A stack can be sized to provide a rated power typically comprised between 500 kW and 6 MW.

Depending on the number of stacks S in a cluster $C_i$, such a cluster can therefore have a rated power typically comprised between 500 kW and 20 MW, and generally selected between 1 MW and 5 MW.

With reference to figure 2, each cluster $C_i$ comprises a transformer & rectifier unit TRU to supply the stacks S with direct current and voltage necessary to its operation. The transformer (of oil or dry type for instance) converts, if necessary, the power provided by the installation transformer unit TU of the installation into about 400V level generally used for operating a stack S. The transformer may be provided with multiple secondary circuit to be associated to the plurality of stacks S, if the cluster indeed include such a plurality of stacks S. Rectifiers (for instance of the thyristor or IGBT type) are disposed downstream of the transformer in the transformer & rectifier unit TRU to provide the operating DC current to the stacks S.

A cluster $C_i$ also comprises an electrolyzer process unit EPU that prepares the electrolyte for circulation into the stacks S and operates the separation of the produced gas from the liquid electrolyte that is extracted from the stacks S. The electrolyzer process unit EPU may comprise electrolyte pumps for the circulation of the electrolyte through the stacks, heat exchangers to cool it down, and liquid/gas separators. In some instance the electrolyzer process unit EPU is not dedicated to a single cluster but mutualized by a plurality of clusters just like other auxiliaries of the installation P.

The installation P is operated by a supervision unit SU, which will be described in more detail in a later section of this description. The supervision unit SU can be formed by a computer system comprising one or more processing units connected to one or more memory units, as is known in the art. The supervision unit repetitively operates at successive sampling periods k. In particular, the supervision unit SU configures the clusters at each sampling period k to operate in one of several possible modes, which will be described in more detail later in this description. The supervision unit SU also prepares and supplies, at each successive sampling period k, the DC current setpoints $x^k_i$ of the active electrolysis clusters $C_i$ of the installation P. Such setpoints $x^k_i$ may be expressed as a proportion of a maximum rated current $I_{max,i}$ of a cluster $C_i$, meaning $x^k_i$ ranges from 0 to 1. Each element of the installation P is equipped with appropriate sensors to provide the data $M^k_i$ necessary for operating the installation P, such as the mass flow of produced hydrogen, the current and voltage measurement of each stacks S of the cluster $C_i$... The collected data $M^k_i$ are stored in a memory space of the supervision unit SU.

Cluster operating modes and behaviors

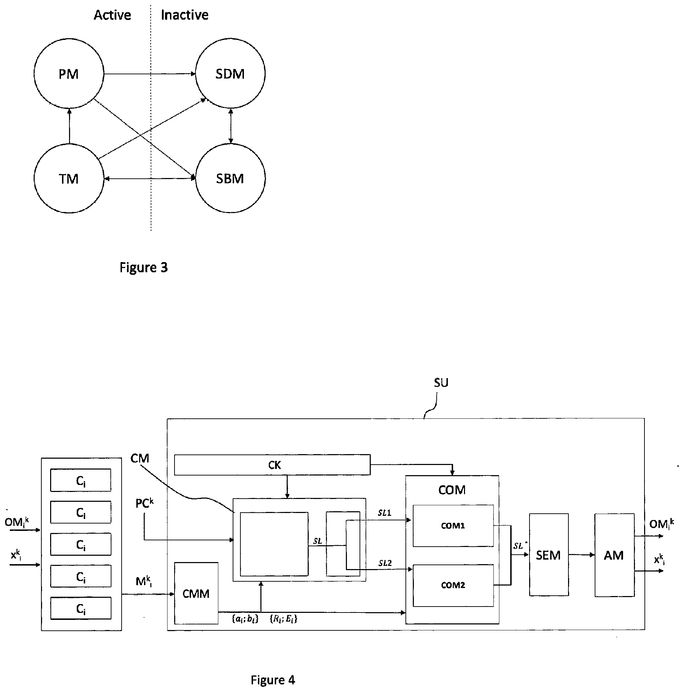

A cluster $C_i$ of the installation P may operate in various operating modes, as this is illustrated on figure 3, with each mode being possibly subject to specific operational constraints.

A cluster $C_i$ may notably operate in a production operating mode PM and according to a current setpoint $x_i$ provided by the supervision unit SU. Such a cluster $C_i$ is considered as "active" as it contributes to the hydrogen production rate of the installation P. When operating in the production operating mode, a cluster may be subject to operational constraints. For instance, the current setpoint $x_i$ may need to lie within a specific range, typically from 0.4 to 1, to ensure the cluster operates under favorable conditions. A cluster in production operating mode may therefore be associated with a minimum setpoint $pr_{inf}$.

A cluster may also operate in a shutdown operating mode SDM (also sometime referred to as "cold standby mode"), for instance for maintenance reasons. The shutdown operating mode SDM is a fail-safe mode that may be triggered by the supervision unit SU upon detection of an abnormal situation. The shutdown operating mode SDM may be entered from any other operating mode. A cluster in shutdown operation mode SDM is considered "inactive" as it does not contribute to the hydrogen production rate of the installation P.

A cluster in production operating mode PM or in shutdown operating mode SDM may be set to enter standby operating mode SBM (also named sometime "hot standby mode"), by the supervision unit SU. In the standby operating mode SBM, a cluster is inactive but may be activated by the supervision unit SU at a later time. It may also be placed in a shutdown operating mode SDM, if required. Recovering a cluster from the shutdown operating mode SDM into production mode PM requires longer time and process sequence than recovering from the standby operating mode SBM.

Usually, a cluster may not be maintained in standby operating mode SBM for a duration $T_{off}$ greater than a maximum duration $T_{off\_max}$, of the order of 100 hours. When such duration is exceeded, the supervision unit SU set the cluster in the shutdown operating mode SDM. Limiting the duration of a cluster's standby operating mode to the maximum duration $T_{off\_max}$ is another operational constraint that should preferably be considered by the supervision unit SU while operating the installation P.

A cluster in a standby operating mode SBM that is activated by the supervision unit SU enters a transient operating mode TM. In the transient operating mode TM, the cluster is active and may potentially contribute to the hydrogen production rate of the installation P, although in some instance the produced hydrogen may simply be vented. In the transient operating mode TM, the current setpoint is carefully controlled by the supervision unit SU to gradually transition into the production operating mode PM. The supervision unit SU may deactivate a cluster in the transient operating mode TM to enter back the standby operating mode SBM or in the shutdown operating mode SDM.

A cluster operating in transient operating mode TM may be associated to a minimum setpoint $tr_{inf}$ that may differ from the minimum setpoint $pr_{inf}$ of a cluster operating in production operating mode PM. For simplicity of the present description, it is assumed that a cluster is operating in transient operating mode for a period of time that is less or equal to the sampling period. This means that if a given cluster is set to operate in transient operating mode TM at the sampling period k, the given cluster will operate in production operating mode PM at the next sampling period k+1. This however does not limit the principle of the present invention, and more generally, the transient operating mode may be operated for a period that is longer than the sampling period, for instance 2 to 5 sampling periods.

The list of operating modes and operational constraints described should not be considered exhaustive. A cluster in an installation according to other embodiments may include additional operating modes and/or further operational constraints, or, more generally, different operating modes and constraints than those presented in the illustrative embodiment.

The operating mode of each cluster, its active or inactive status is stored within the memory space of the supervision unit SU. The active or inactive status may be stored as binary information $y_i^k$, with for instance $y_i^k = 1$ to denote an active status of a given cluster $C_i$ at a given sampling period k and $y_i^k = 0$ to denote an inactive status of the given electrolysis cluster $C_i$ at the given sampling period k.

As it has been mentioned before, the various clusters $C_i$ of the installation P do not operate in exactly the same fashion. Their behavior may also vary over time: short-term variations can be due to changes in temperature, concentration and/or quality of the electrolyte and other environmental conditions of the clusters. Medium-term variations can be due to ageing of the stacks. The behavior of each clusters $C_i$ of the installation may be characterized by a power model and an efficiency model.

The power model relates the power drawn by a cluster $C_i$ with its current setpoint $x_i$. The power model is derived from the polarization curves of the stack(s) S composing the cluster, such curves associating the voltage and current of a stack S. Depending on the electrical combination of the stacks in a cluster (parallel and/or series combination), the polarization curve may be combined such that the voltage $U_i$ developing in a cluster $C_i$ may be related to the direct current $x_i*I_{max,i}$ traversing the cluster by the following linear approximation:

$$U_i \ = \ E_i \ + \ R_i * x_i * I_{max,i}$$

Consequently, the power $P_i$ drawn by a cluster $C_i$ may be expressed as $P_i = (E_i + R_i * x_i*I_{max,i}) * x_i*I_{max,i}$, where $R_i$ and $E_i$ are the parameters of the power model associated to a given electrolysis cluster $C_i$

Similarly, the efficiency model relates the hydrogen production rate $m_{H2,i}$ produced by a given electrolysis cluster $C_i$ with its current setpoint $x_i$. This relation may be approximated by the linear relation $m_{H2,i} = a_i * x_i*I_{max,i} + b_i$, where $a_i$ and $b_i$ are the parameters of the efficiency model associated to a given electrolysis cluster $C_i$.

The power model parameters and efficiency model parameters may be held by the supervision unit SU, identified from the historical data of the clusters $M_i^k$ stored in the memory space of the supervision unit SU. As mentioned above, these parameters are not fixed over time and can evolve as the cluster's environmental conditions change. This is particularly true for the power model.

Consequently, the supervision unit SU may exploit the data $M_i^k$ provided by the elements of the installation P during its operation, in particular the voltage $U_i^k$, currents $I_i^k$, to regularly update the power model parameters $R_i$ and $E_i$. This may also apply to the efficiency model, although the efficiency behavior of a cluster appears to be more stable over time.

This parameters identification procedure may not be performed at each sampling period by the supervision unit SU. It can be performed asynchronously to this sampling period,-for instance every hour or every day or at any other frequency. If the parameters of the efficiency model are also updated, from time to time, this may be performed independently to the update of the power model parameters.

Optimization Strategy

As stated in the introduction of this document, the supervision unit SU is operated to meet the production constraints of the installation P while aiming for an efficiency objective, which can be expressed as an objective function. In certain embodiments, it may be additionally desirable that the installation adheres to further operational constraints as previously described.

In some embodiments, the production constraint is a predetermined hydrogen production rate $m_{H2}$ of the installation P. The objective function is the function providing the power or energy drawn by the electrolysis clusters according to the active cluster respective current setpoints. In such embodiments, the supervision unit SU is configured to determine the active clusters $y_i$ and their current setpoints $x_i$ to minimize the objective function (power or energy drawn) while meeting the production constraint (hydrogen production rate). The problem may be described with the following equations exploiting the clusters power models and efficiency models.

Objective function:

$$\min \sum_{i=1}^{n} (E_i * I_{max,i} * x_i + R_i * I_{max,i}^2 * x_i^2) * y_i^{+1} * T_{window} + (P_{aux_{on}} * y_i^{+1} + P_{aux_{off}}$$

$$* (1 - y_i^{+1})) * T_{window}$$

Production constraint:

$$\sum_{i=1}^{n} ((a_i * I_{max,i} * x_i + b_i) * y_i^{-1} * y_i^{+1} * T_{window} + (a_i * I_{max,i} * x_i + b_i) * (1 - y_i^{-1})$$

$$* y_i^{+1} * (T_{window} - T_{transient})) - m_{H2} = 0$$

Operational constraints:

$$tr_{inf} * (1 - y_i^{-1}) * y_i^{+1} + pr_{inf} * y_i^{+1} * y_i^{-1} - x_i \leq 0, \quad \forall i \in [1, n] \cap \mathbb{N}$$

$$x_i - 1 * y_i^{+1} \leq 0, \quad \forall i \in [1, n] \cap \mathbb{N}$$

$$T_{off,i} \leq T_{off\_max}, \quad \forall i \in [1, n] \cap \mathbb{N}$$

$$T_{window} - T_{transient} \geq 0$$

$$y_i^{+1} \in \{0,1\}, \quad \forall i \in [1, n] \cap \mathbb{N}$$

$$y_i^{-1} \in \{0,1\}, \quad \forall i \in [1, n] \cap \mathbb{N}$$

$$x_i \in \mathbb{R}$$

With

n : Number of clusters of the installation,
$I_{max,i}$ : in [A], Maximum load that a cluster i can absorb,

$m_{H2}$ : in [kg], Production target of H2 at the end of a defined time window,

$T_{off,i}$ : in [s], Time spent in standby operating mode for cluster i,

$T_{offmax}$ : in [s], Maximal in standby operating mode,

$T_{window}$ : in [s], sampling period,

$T_{transient}$ : in [s], Duration of transient event between standby operating mode and production operating mode,

$tr_{inf}$ : in [%], Minimum setpoint allowed during the transient operating mode,

$pr_{inf}$ : in [%], Minimum setpoint allowed during the production operating mode

$P_{aux_{on}}$ : in [W], Power consumed by auxiliaries for a single cluster in production operating mode,

$P_{aux_{off}}$ : in [W], power consumed by the auxiliaries for a single cluster in standby operating mode,

$y_i^{-1}$ : binary variable (cluster active/inactive) for cluster I at the previous sample,

$y_i^{+1}$ : binary variable (cluster active/inactive) for cluster I at the current sample

In other embodiments the production constraint is a predetermined available power Pa of the installation P. The objective function is a function providing the hydrogen production rate according to the active cluster respective current setpoints. In such embodiments, the supervision unit SU is configured to determine the active clusters $y_i$ and their Current setpoints $x_i$ to maximize the objective function (hydrogen production rate) while meeting the production constraint (available power Pa). The problem may be described with the following equations exploiting the clusters power models and efficiency models.

Objective function:

$$\max \sum_{i=1}^{n} (a_i * I_{max,i} * x_i + b_i) * y_i^{-1} * y_i^{+1} * T_{window} + (a_i * I_{max,i} * x_i + b_i) * (1 - y_i^{-1})$$

$$* y_i^{+1} * (T_{window} - T_{transient})$$

Production constraint:

$$\sum_{i=1}^{n} y_i^{+1} * (E_i * I_{max,i} * x_i + R_i * I_{max,i}^2 * x_i^2) - (P_a - P_{aux_{on}} * y_i^{+1} - P_{aux_{off}} * (1 - y_i^{+1}))$$

$$= 0$$

Operational constraints:

$$tr_{inf} * (1 - y_i^{-1}) * y_i^{+1} + pr_{inf} * y_i^{+1} * y_i^{-1} - x_i \le 0, \quad \forall i \in [1,n] \cap \mathbb{N}$$

$$x_i - 1 * y_i^{+1} \le 0, \quad \forall i \in [1,n] \cap \mathbb{N}$$

$$T_{off,i} \le T_{off_{max}}, \forall i \in [1,n] \cap \mathbb{N}$$

$$T_{window} - T_{transient} \ge 0$$

$$y_i^{+1} \in \{0,1\}, \forall i \in [1,n] \cap \mathbb{N}$$

$$y_i^{-1} \in \{0,1\}, \forall i \in [1,n] \cap \mathbb{N}$$

$$x_i \in \mathbb{R}$$

In addition to the production constraint, these optimization problems also include, for illustration purposes, the operational constraints presented in a previous section. The operational constraints that are imposed to the cluster setpoints $x_i$ are named primary operational constraints in the following part of this document. The operational constraints that relate to the selection of the active clusters that may participate to the production of hydrogen are named secondary operational constraints.

The optimization problems each form a mixed integer nonlinear programming problem, involving both discrete and continuous variables as well as nonlinearity. Although it can be solved using numerical solvers, addressing such problems necessitates a dedicated IT infrastructure equipped with specific coding languages, libraries, and packaged solvers or software like Cplex, GAMS, Gurobi, and Pyomo. It often entails complex resolution processes that are not always well managed and require long computation times.

To address the issue, and in very general terms, the inventors of the present invention have realized that the complexity of the problem resolution may be reduced by adopting a two steps approach.

In a first step, all cluster pools capable of satisfying the production constraint and, if present, secondary operational constraints are exhaustively listed. By "cluster pool" it is meant a set of active electrolysis clusters selected among the plurality of electrolysis clusters $C_i$ of the installation P. During this first step of the approach, all cluster pools that cannot meet the production constraint and, if present, secondary operational constraints are set aside and are not processed in the second step, and only retained cluster pools are progressing to the second step.

In this second step, optimal current setpoints of the electrolysis clusters of each retained cluster pool are calculated. Since this calculation is performed on a given set of electrolysis clusters, the expression of the optimization problem is simplified. For instance, the expression of the first exemplary optimization problem under the assumption that the evaluated cluster pool corresponds to all the clusters of the installation P, in production mode ($y^{-1}$ and $y^{+1} = 1$ for all clusters of the installation P) may be expressed as :

$$min \sum_{i=1}^{n} E_i * I_{max,i} * x_i + R_i * I_{max,i}^2 * x_i^2$$

under the constraints:

$$\sum_{i=1}^{n} (a_i * I_{max,i} * x_i + b_i) - m_{H2} = 0$$

$$pr_{inf} - x_i \leq 0, \quad \forall i \in [1,n] \cap \mathbb{N}$$

$$x_i - 1 \leq 0, \quad \forall i \in [1,n] \cap \mathbb{N}$$

$$x_i \in \mathbb{R}$$

Similarly, the expression of the second exemplary optimization problem under the same assumption that the evaluated cluster pool corresponds to all the clusters of the installation P, in production mode ($y^{-1}$ and $y^{+1} = 1$ for all clusters of the installation P) may be expressed as:

$$\max \sum_{i=1}^{n} (a_i * I_{max,i} * x_i + b_i)$$

under the constraints:

$$\sum_{i=1}^{n} (E_i * I_{max,i} * x_i + R_i * I_{max,i}^2 * x_i^2) - P_a' = 0$$

$$pr_{inf} - x_i \leq 0, \quad \forall\, i \in [1,n] \cap \mathbb{N}$$

$$x_i - 1 \leq 0, \quad \forall\, i \in [1,n] \cap \mathbb{N}$$

$$x_i \in \mathbb{R}$$

With $P_a'$ as the available power after subtracting the power used by the auxiliaries.

Both expressions form conventional quadratic programming problems that can be solved, with low computational load, by a variety of methods, such as the active set method, the augmented Lagrangian method, the gradient projection method...

Whichever method is used in the second step, the optimal current setpoints of the electrolysis clusters of each pool of clusters retained in the first step of the method are calculated.

Then the cluster pool that establish the best performance, in term of objective function, may be retained for application to the installation in the next sampling period.

Analytical solving of the Optimization Problem

Although the optimizations problems proposed in the previous section can be solved using a variety of approaches, an approach based on the active set method has the advantage of providing an analytical rather than a numerical solution. Obtaining the optimal setpoints analytically requires less computation than a purely numerical approach.

To illustrate this preferred approach, that is based in the active set approach very well known to the skilled person, the formulation of the second exemplary optimization problem may be expressed, under this method as the following KKT system:

$$eq\ (1):\ \begin{cases} - a_i * I_{max} + v * (E_i * I_{max} + 2 * R_i * I_{max}^2 * x_i) - u_i + \mu_i = 0\,, \forall\, i \in [1,n] \cap \mathbb{N} \\ \sum_{i=1}^{n} (E_i * I_{max,i} * x_i + R_i * I_{max,i}^2 * x_i^2) - P_a' = 0 \\ u_i * (pr_{inf} - x_i) = 0, \quad \forall\, i \in [1,n] \cap \mathbb{N} \\ \mu_i * (x_i - 1) = 0, \quad \forall\, i \in [1,n] \cap \mathbb{N} \end{cases}$$

Under the so called KKT constraints:

$$pr_{inf} - x_i \leq 0, \quad \forall\, i \in [1,n] \cap \mathbb{N}$$

$$x_i - 1 \leq 0, \quad \forall\, i \in [1,n] \cap \mathbb{N}$$

$$u_1, \dots, u_n \geq 0$$

$$\mu_1, \dots, \mu_n \geq 0$$

were $u_i$, and $\mu_i$ are called KKT multipliers.

An initial analytical solution $x_i^0$ derivable from eq(1), for each i in [1,n] and not taking into account the KKT constraints, is

$$x_i^0 = \frac{a_i}{2.R_i.I_{max}} \cdot \sqrt{\frac{\sum_{k=1}^n E_k^2/R_k + 4.P_a'}{\sum_{k=1}^n a_k^2/R_k}} - \frac{E_i}{2.R_i.I_{max}}$$

In successive iterations p (p being comprised between 0 and at most n), the analytical solution $x_i^p$ is established and :

- if no KKT constraints are violated, then ( $x_1^p, \dots, x_n^p$ ) is an optimal solution to the original problem.

- Otherwise, the variable $x_{i*}^p$ that violate the most the inequality constraints is fixed to that constraint (i.e. $x_{i*}^p$ is either fixed to 1 or to $pr_{inf}$). The KKT equations are updated with the fixed value of $x_{i*}^p$ eliminated from the variables.

A new formulation of the analytical solution $x_i^{p+1}$ at iteration p+1, for the remaining n* variables may be expressed as:

$$x_i^{p+1} = \frac{a_i}{2.R_i.I_{max,i}} \cdot \sqrt{\frac{\sum_{k\in[1,n]-I*}(\frac{E_k^2}{R_k}) +4.P_{p+1}}{\sum_{k\in[1,n]-I*}\frac{a_k^2}{R_k}}} - \frac{E_i}{2.R_i.I_{max,i}} \quad ,\forall\, i\, \in [1,n] - I *$$

$\cap \mathbb{N}$

With I* as the set of $x_i$ fixed to $pr_{inf}$ or 1 during the different iterations because they violated a constraint and $P_{p+1}$ = $Pa' - \sum_{i\in I*} (E_i * I_{max,i} * x_i + R_i * I_{max,i}^2 * x_i^2)$ .

Using this analytical optimization approach in the second step of the method, optimal current setpoints of the electrolysis clusters of each clusters pool retained in the first step of the method are calculated.

The principles of the two-step approach being exposed, the following section of the present description expose their practical implementation by the supervision unit SU.

Description of the supervision unit

The supervision unit SU is configured to implement such a two steps approach to resolve the optimization problem.

Specifically, the supervision unit SU is defining, repetitively at successive sampling periods k provided by a clock module CK, the operating mode $OM^k_i$ (and, indirectly, active status $y^k_i$ that may be derived from such operating mode) and the current setpoints $x^k_i$ of each active electrolysis cluster $C_i$.

The supervision unit SU is provided with, or establishes, the production constraint $PC^k$, such as the given hydrogen production rate or the given available electrical active power.

The supervision unit SU holds in its memory space, and maintain updates of, the configuration of the installation P and the parameters of the electrolysis clusters $C_i$. This includes the number n of clusters, the current and past operating modes $OM^k_i$, active status $y^k_i$ of the clusters $C_i$, the time spent in the current and past operating mode, the nominal power and nominal hydrogen production rate of each cluster, the maximum direct current $I_{max,i}$ of the clusters, and data $M^k_i$ collected from the clusters $C_i$.

To simplify the present description, it is assumed that all clusters of the installation P are available, i.e. none of them is in the shutdown operating mode SDM. Such clusters are not able to contribute immediately to the functioning of the installation and is therefore disregarded by the supervision unit for that purpose.

With reference to Figure 4, the supervision unit comprises a modelling module CMM. The modelling module CMM receives and stores the data $M^k_i$ collected from the electrolysis clusters $C_i$, particularly the voltage $U^k_i$, currents $I^k_i$,

hydrogen production rate $m_{H2,I}$ or similar data. From the collected data, the modelling module CMM determines and stores, for each cluster Ci, the parameters of the linear power model Ei,Ri and the parameters of the linear efficiency model ai,bi of that cluster Ci. The modelling module CMM also provides or makes these model parameters available to other modules of the supervision unit SU. As mentioned above, it is not necessary to update the model parameters synchronously with the supervision unit SU, such as at each sampling period k. Although it is beneficial to regularly update the model parameters, in particular with respect to the power model, this can be done asynchronously, for instance, on a daily or hourly basis, or triggered by a specific event, for instance when the cluster enters a specific operating mode such as the production operating mode PM.

The supervision unit SU represented on figure 4 also comprises a candidate module CM. the candidate module CM is configured to establish, during each sampling period k, a candidate list SL consisting of all cluster pools capable of satisfying the production constraint $PC^k$ and secondary operational constraints, if such secondary constraint exists.

To this effect, the candidate module CM exhaustively lists and evaluates all the possible $2^n$ pools of clusters $C_i$. For instance, if the installation is made of 4 clusters respectively named "0", "1", "2" and "3", the candidate module CM will produce the exhaustive list of cluster pools made of all possible active cluster combination { [0,1], [1,2,3], [0,1,2], [1], [0,1,2,3], [1, 2], ...}

A given cluster pool from the exhaustive list that can satisfy the production constraint $PC^k$ (and optional secondary operational constraints) is placed in the candidate list SL. To the contrary, a given cluster pool from the exhaustive list that cannot satisfy the production constraint PC (or optional secondary operational constraints) is not placed in the candidate list SL.

For instance, if the cluster pool is constituted of a sole cluster presenting a rated power of 1MW, this cluster pool cannot satisfy a power production constraint $PC^k$ of 2MW, and it is therefore not retained in the candidate list. Conversely, if a cluster pool is constituted of three clusters presenting each a rated power of 1MW, this cluster pool will be able to satisfy a power production constraint $PC^k$ of 2MW, and is therefore retained in the candidate list.

In some embodiment, in particular when the production constraint is expressed in terms of a given available electrical power, the candidate module CM is configured to adjust the power production constraint $PC^k$ to take into account the power required to operate the auxiliaries (TRU, EPU,...) associated to a particular cluster pool. Powering the auxiliaries indeed reduces the power production constraint $PC^k$.

So, according to this embodiment, the candidate module CM identifies, in a cluster pool under evaluation, the estimated power $P_{aux}$ required to operate that particular pool and subtract that estimated power $P_{aux}$ to the given available electrical power $PC^k$. Then, the candidate module CM verifies that the cluster pools from the exhaustive list can indeed satisfy the adjusted production constraint $PC^k$.

When secondary operational constraints exist, the candidate module CM is configured to constitute the candidate list SL with all cluster pools capable of satisfying both the production constraint and the secondary operational constraint.

The secondary operational constraint may be associated to a minimum setpoint allowed during the production operating mode $pr_{inf}$. If such a constraint exists, a cluster pool may not be part of the candidate list SL if, when operated at their minimum setpoints, the clusters of the pool are drawing more power from the network than available (the power production constraint $PC^k$). For instance, if a cluster pool is constituted of three clusters presenting each a rated power of 1MW and a minimum setpoint of 0.4 (hence a minimum production of 1.2MW), this cluster pool will not be able to satisfy this minimum setpoints constraint if the power production constraint $PC^k$ is set at 1MW. This cluster pool cannot therefore be retained in the candidate list SL.

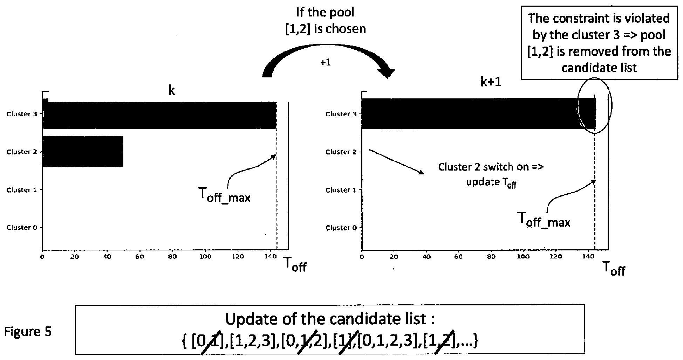

The secondary operational constraints may correspond to force the activation of a cluster in standby operating mode SM, if maintaining this cluster in the standby operating mode SM would exceed its maximum duration $T_{off\_max}$ in this mode. In such a case, the candidate module CM would exclude from the candidate list SL all the pools that do not include a cluster in standby operation mode SM that is about to exceed the maximum duration $T_{off\_max}$ (for instance in the next sample period k+1). This is illustrated by figure 5, which represents on the left graph the duration in standby mode $T_{off}$ of each of the 4 clusters of the exemplary installation P at sample time k. The graph on the right represents the duration in standby mode $T_{off}$ of each of the 4 clusters at sample time k+1 if the clusters pool [1,2] was to be activated. Since this pool does not include cluster "3", this cluster would be maintained in standby operational mode one additional sample period, would then exceed the maximal duration $T_{off\_max}$ and therefore not respect the secondary operational constraint. Consequently, the cluster pool [1,2] cannot be retained in the candidate list, just as other cluster pools such as [0,1], [0,1,2], [1], [1,2]. Conversely, cluster pools [1,2,3] and [0,1,2,3] may be integrated in the candidate list SL, as those pools activate cluster 3 that therefore leaves the standby operational mode SM.

Other secondary operational constraints may be set, for instance to avoid activating/deactivating a cluster too frequently over a given period or to take into account other operational constraints in the selection of the active cluster that may participate to the production of hydrogen. This may for instance correspond to a minimum duration of production operational mode PM.

The candidate list SL prepared by the candidate module CM is provided to an optimization module COM of the supervision unit. Generally speaking, the optimization module COM is configured to calculate, during each sampling period k and for each cluster pool of the candidate list SL proposed by the candidate module CM, optimal current setpoints $x_i^k$ of the electrolysis clusters $C_i$ of said pool, optimizing (i.e. maximizing or minimizing) the objective function under the production constraint and, if present, under the primary operational constraints. The optimization module COM is also configured to associate an efficiency value to each said pool, said efficiency value corresponding to value provided by the objective function when the optimal current setpoints $x_i^k$ are applied to this function.

In most embodiments, the electrolysis cluster setpoints $x_i$ should also comply to primary operational constraints, in addition to the production constraint. For instance, and this has already been expressed in a previous section, each electrolysis cluster may be operated at a current setpoint $x_i^k$ comprised between a minimum current setpoint and a maximum current setpoint. The minimum current setpoint may be for instance comprised between 20% and 50% of the maximum current setpoint of the cluster. The primary operational constraints are taken into account by the calculation performed by the optimization module COM.

As it has been presented above, for a given cluster pool, the optimization calculation performed by the optimization module COM, in the presence of optional primary operational constraint, corresponds to quadratic programming problem that can be solved, with low computational load, by a variety of methods, such as the active set method, the augmented Lagrangian method, the gradient projection method... But most preferably, the optimization module is configured to calculate the optimal current setpoints $x_i^k$, for each cluster pool of the candidate list SL, analytically, according to the approach based on the active set method presented in a previous section of the present description.

In some embodiment, to facilitate the calculation performed by the optimization module COM, the candidate module CM is configured to divide the candidate list SL in two candidate sub-lists SL1,SL2. A first candidate sub-list SL1 is only composed of cluster pools made of clusters in production operating mode PM. The second candidate sub-list SL2 is only composed of cluster pools comprising at least one cluster in transient operating mode TM. The two candidate sub-lists SL1, SL2 are provided to respective optimization sub-modules COM1,COM2 of the optimization module COM.

In the embodiment represented on figure 4, the first candidate sub-list SL1 (made of pools comprising clusters in production mode PM) is provided to a first optimization sub-module COM1. The first optimization sub-module COM1 is configured to provide, for each pool of the sub-list SL1, the optimal current setpoints $x_i^k$ of each clusters $C_i$.

Similarly, the second candidate sub-list SL2 (made of pools comprising at least one cluster in transient mode TM) is provided to a second optimization sub-module COM2. For each pool of the second sub-list SL2, the second optimization sub-module COM1 is configured to first set the current setpoint of a cluster in transient operating mode TM to a predefined transient setpoint, or to a predefined minimum transient setpoint. Then, the optimal current setpoints of the remaining clusters of the cluster pool are obtained by optimization.

In all embodiments, during the sampling period k, the optimization module COM complements the candidate list SL prepared by the candidate modules CM by assigning the optimal current setpoints $x_i^k$ and an efficiency value to each cluster pool of this candidate list. The list provided by the optimization module is named "complemented candidate list" SL*.

Referring back the figure 4, the supervision unit SU also comprises a selection module SEM configured select the most efficient cluster pools among all the cluster pools present in the complemented candidate list SL* provided by the optimization module COM. To this effect, and during each sampling period k, the selection module SEM is configured to select, in the complemented candidate list SL*, the cluster pool presenting an optimal efficiency value among all the calculated efficiency values. The optimal efficiency value corresponds to the largest efficiency value if the objective function is to be maximized or to the smallest efficiency value if the objective function it to be minimized. This allows to select the cluster pool providing the global optimal solution, i.e. configuring the clusters of the installation P in the most appropriate manner.

The selection module SEM is providing the selected cluster pool to an application module AM of the supervision unit SU. The application module AM is defining the operating mode $OM_i^k$ of the electrolysis clusters $C_i$ of the installation P for the next sampling period k in compliance with the selected cluster pool. This may include the updating of an operating mode table stored in the memory space of the supervision unit. This also includes communicating to the respective electrolysis clusters $C_i$ their operating mode such that the cluster may configure themselves accordingly if this corresponds to a change in operating mode. The application module AM is also defining the respective current setpoints $x_i^k$ of the active clusters for the next sampling period as the optimal current setpoints of the selected cluster pool provided by the selection module.

Other variations to the disclosed examples can be understood and affected by those skilled in the art in practicing the claimed invention, from a study of the drawings, the disclosure, and the appended claims.

**Claims**

1. Water electrolysis installation (P) drawing power from an electrical network (NET) and providing an hydrogen production rate, the installation (P) comprising a plurality of clusters (Ci), each clusters ($C_i$) of the plurality being, at a given sampling period (k), either an active cluster, in a production operating mode (PM) or in a transient operating mode (TM), which may contributes to the hydrogen production rate of the installation (P) or an inactive cluster, in a standby operating mode (SBM) or in a shutdown operating mode (SDM), which does not contribute to the hydrogen production rate of the installation (P) and the installation (P) further comprising a supervision unit (SU) defining, repetitively at successive sampling periods (k), the operating mode of the clusters ($C_i$) and a current setpoint ($x^i_k$) of each active cluster (Ci), the supervision unit (SU) comprising:

- a candidate module (CM) configured to establish, during each sampling period, a candidate list (SL) consisting of all cluster pools capable of satisfying a production constraint;
- an optimization module (COM) configured to calculate, during each sampling period (k), for each cluster pool of the candidate list (SL), optimal current setpoints of the clusters and an associated efficiency value of said pool, the optimal current setpoints optimizing an objective function under the production constraint;
- a selection module (SEM) configured, during each sampling period, to select among all cluster pools of the candidate list, the cluster pool presenting an optimal efficiency value ;
- an application module (AM), the application module defining the operating mode ($OM_i^k$) of the clusters ($C_i$) of the installation (P) for the next sampling period (k) in compliance with the selected cluster pool, and the application module defining also the respective current setpoints ($x^k_i$) of the active clusters for the next sampling period (k) as the optimal current setpoints of said selected cluster pool.

2. Water electrolysis installation (P) according to the preceding claim further comprising a modelling module (CMM) that identifies, for each cluster ($C_i$):

   i. parameters of a power model ($E_i$, $R_i$) that relates the power drawn by a cluster ($C_i$) with the cluster current setpoint ($x^i$) ;
   ii. parameters of an efficiency model (ai,bi) that relates an hydrogen production rate of a cluster ($C_i$) with a cluster current setpoint (Xi);

   wherein the objective function and the production constraint are based on the parameters of the power model ($E_i$, $R_i$) and on the parameters of the efficiency model (ai,bi).

3. Water electrolysis installation (P) according to any preceding claims wherein the objective function is a function providing a power drawn by the electrolysis clusters according to the active clusters respective current setpoints, the production constraint is a predetermined hydrogen production rate of the installation (P) and the supervision unit (SU) is configured to minimize the objective function.

4. Water electrolysis installation (P) according to claim 1 or 2 wherein the objective function is a function providing a hydrogen production rate according to the active cluster respective current setpoints, the production constraint is a predetermined available power (Pa) of the installation (P) and the supervision unit (SU) is configured to maximize the objective function.

5. Water electrolysis installation (P) according to the preceding claim wherein the candidate module (CM) is configured to assess, for each cluster pool of the candidate list (SL), the estimated power ($P_{aux}$) required to operate said cluster pool and to subtract the estimated power ($P_{aux}$) to the given available electrical power ($PC^k$)

6. Water electrolysis installation (P) according to any preceding claims wherein the optimization module (COM) is configured to calculate, for each cluster pool of the candidate list (SL), optimal current setpoints that also satisfy at least one primary operational constraint imposed to the cluster current setpoints ($x^k_i$).

7. Water electrolysis installation (P) according to the preceding claim wherein the optimization module (COM) is configured to calculate the optimal current setpoints according to an active set method.

8. Water electrolysis installation (P) according to the two preceding claims wherein the primary operational constraint comprises operating each active cluster of a cluster pool at a current setpoint ($x^k_i$) comprised between a minimum current setpoint ($pr_{inf}$) and a maximum current set point.

9. Water electrolysis installation (P) according to the preceding claim wherein the minimum current setpoint ($pr_{inf}$) is comprised between 20% and 50% of the maximum current setpoint of the cluster (Ci).

**10.** Water electrolysis installation (P) according to any preceding claims wherein the candidate module (CM) is also configured to provide a candidate list (SL) consisting of cluster pools capable of satisfying at least one secondary operational constraint.

**11.** Water electrolysis installation (P) according to the preceding claim wherein the secondary operational constraint comprises activating an electrolysis cluster in standby operating mode if said electrolysis cluster is in standby operating mode for a duration ($T_{off}$) equal to a maximum duration ($T_{off\_max}$).

**12.** Water electrolysis installation (P) according to any preceding claims wherein the candidate module (CM) is also configured to divide the candidate list (SL) in a first candidate sub-list (SL1) of cluster pools, each cluster pool of the first candidate sub-list (SL1) being only composed of electrolysis clusters in production operating mode (PM), and a second sub-list (SL2) of cluster pools, each cluster pool of the second sub-list (SL2) comprising at least one electrolysis cluster in transient operating mode (TM).

**13.** Water electrolysis installation (P) according to the preceding claim wherein the optimization module (COM) is configured, for any cluster pool of the second candidate sub-list (SL2), to set the current setpoint of any clusters in transient operating mode (TM) of said cluster pool to a predefined transient setpoint or to a predefined minimum transient setpoint, and to then calculate the optimal current setpoints for the remaining clusters of said cluster pool.

**14.** Water electrolysis installation (P) according to the two preceding claims wherein the optimization module is configured, for any cluster pool of the first candidate sub-list (SL1), to calculate the optimal current setpoints of all the clusters of said cluster pool.

**Amended claims in accordance with Rule 137(2) EPC.**

**1.** Water electrolysis installation (P) drawing power from an electrical network (NET) and providing an hydrogen production rate, the installation (P) comprising a plurality of clusters ($C_i$), each clusters ($C_i$) of the plurality being, at a given sampling period (k), either an active cluster, in a production operating mode (PM) or in a transient operating mode (TM), which may contributes to the hydrogen production rate of the installation (P) or an inactive cluster, in a standby operating mode (SBM) or in a shutdown operating mode (SDM), which does not contribute to the hydrogen production rate of the installation (P) and the installation (P) further comprising a supervision unit (SU) defining, repetitively at successive sampling periods (k), the operating mode of the clusters ($C_i$) and a current setpoint ($x^i_k$) of each active cluster ($C_i$), the water electrolysis installation (P) being **characterized in that** the supervision unit (SU) comprises:

    - a candidate module (CM) configured to establish, during each sampling period, a candidate list (SL) consisting of all cluster pools capable of satisfying a production constraint;
    - an optimization module (COM) configured to calculate, during each sampling period (k), for each cluster pool of the candidate list (SL), optimal current setpoints of the clusters and an associated efficiency value of said pool, the optimal current setpoints optimizing an objective function under the production constraint;
    - a selection module (SEM) configured, during each sampling period, to select among all cluster pools of the candidate list, the cluster pool presenting an optimal efficiency value ;
    - an application module (AM), the application module defining the operating mode ($OM_i^k$) of the clusters ($C_i$) of the installation (P) for the next sampling period (k) in compliance with the selected cluster pool, and the application module defining also the respective current setpoints ($x^k_i$) of the active clusters for the next sampling period (k) as the optimal current setpoints of said selected cluster pool.

**2.** Water electrolysis installation (P) according to the preceding claim further comprising a modelling module (CMM) that identifies, for each cluster ($C_i$):

    i. parameters of a power model ($E_i$, $R_i$) that relates the power drawn by a cluster ($C_i$) with the cluster current setpoint ($x^i$) ;
    ii. parameters of an efficiency model ($a_i$,$b_i$) that relates an hydrogen production rate of a cluster ($C_i$) with a cluster current setpoint ($x_i$);

wherein the objective function and the production constraint are based on the parameters of the power model ($E_i$, $R_i$) and on the parameters of the efficiency model ($a_i$,$b_i$).

3. Water electrolysis installation (P) according to any preceding claims wherein the objective function is a function providing a power drawn by the electrolysis clusters according to the active clusters respective current setpoints, the production constraint is a predetermined hydrogen production rate of the installation (P) and the supervision unit (SU) is configured to minimize the objective function.

4. Water electrolysis installation (P) according to claim 1 or 2 wherein the objective function is a function providing a hydrogen production rate according to the active cluster respective current setpoints, the production constraint is a predetermined available power (Pa) of the installation (P) and the supervision unit (SU) is configured to maximize the objective function.

5. Water electrolysis installation (P) according to the preceding claim wherein the candidate module (CM) is configured to assess, for each cluster pool of the candidate list (SL), the estimated power ($P_{aux}$) required to operate said cluster pool and to subtract the estimated power ($P_{aux}$) to the given available electrical power ($PC^k$)

6. Water electrolysis installation (P) according to any preceding claims wherein the optimization module (COM) is configured to calculate, for each cluster pool of the candidate list (SL), optimal current setpoints that also satisfy at least one primary operational constraint imposed to the cluster current setpoints ($x^k_i$).

7. Water electrolysis installation (P) according to the preceding claim wherein the optimization module (COM) is configured to calculate the optimal current setpoints according to an active set method.

8. Water electrolysis installation (P) according to the two preceding claims wherein the primary operational constraint comprises operating each active cluster of a cluster pool at a current setpoint ($x^k_i$) comprised between a minimum current setpoint ($pr_{inf}$) and a maximum current set point.

9. Water electrolysis installation (P) according to the preceding claim wherein the minimum current setpoint ($pr_{inf}$) is comprised between 20% and 50% of the maximum current setpoint of the cluster (Ci).

10. Water electrolysis installation (P) according to any preceding claims wherein the candidate module (CM) is also configured to provide a candidate list (SL) consisting of cluster pools capable of satisfying at least one secondary operational constraint.

11. Water electrolysis installation (P) according to the preceding claim wherein the secondary operational constraint comprises activating an electrolysis cluster in standby operating mode if said electrolysis cluster is in standby operating mode for a duration ($T_{off}$) equal to a maximum duration ($T_{off\_max}$).

12. Water electrolysis installation (P) according to any preceding claims wherein the candidate module (CM) is also configured to divide the candidate list (SL) in a first candidate sub-list (SL1) of cluster pools, each cluster pool of the first candidate sub-list (SL1) being only composed of electrolysis clusters in production operating mode (PM), and a second sub-list (SL2) of cluster pools, each cluster pool of the second sub-list (SL2) comprising at least one electrolysis cluster in transient operating mode (TM).

13. Water electrolysis installation (P) according to the preceding claim wherein the optimization module (COM) is configured, for any cluster pool of the second candidate sub-list (SL2), to set the current setpoint of any clusters in transient operating mode (TM) of said cluster pool to a predefined transient setpoint or to a predefined minimum transient setpoint, and to then calculate the optimal current setpoints for the remaining clusters of said cluster pool.

14. Water electrolysis installation (P) according to the two preceding claims wherein the optimization module is configured, for any cluster pool of the first candidate sub-list (SL1), to calculate the optimal current setpoints of all the clusters of said cluster pool.

Figure 1

Figure 2

Figure 3

Figure 4

If the pool
[1,2] is chosen

+1

The constraint is violated
by the cluster 3 => pool
[1,2] is removed from the
candidate list

k

Cluster 3

Cluster 2

Cluster 1

Cluster 0

$T_{off\_max}$

0   20   40   60   80   100   120   140   $T_{off}$

k+1

Cluster 3

Cluster 2

Cluster 1

Cluster 0

Cluster 2 switch on =>
update $T_{off}$

$T_{off\_max}$

0   20   40   60   80   100   120   140   $T_{off}$

Figure 5

Update of the candidate list :
{ [0,1],[1,2,3],[0,1,2],[1],[0,1,2,3],[1,2],…}

Europäisches
Patentamt

European
Patent Office

Office européen
des brevets

## EUROPEAN SEARCH REPORT

**Application Number**

EP 24 31 5430

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 656 893 A1 (H2B2 ELECTROLYSIS TECH S L [ES]) 27 May 2020 (2020-05-27) * paragraphs [0017], [0024]; figure 1 * ----- | 1-14 | INV. H02J3/14 C25B1/04 C25B15/02 H02J13/00 H02J15/00 |
| A | WO 2023/213370 A1 (VESTAS WIND SYS AS [DK]) 9 November 2023 (2023-11-09) * page 5; figures 1,2 * ----- | 1 | |
| A | US 2010/114395 A1 (HINATSU JIM [CA] ET AL) 6 May 2010 (2010-05-06) * paragraph [0111]; figure 1 * ----- | 1 | |
| A | US 2019/343616 A1 (STONE SIMON G [US]) 14 November 2019 (2019-11-14) * paragraphs [0071] - [0073] * ----- | 1 | |

**TECHNICAL FIELDS SEARCHED (IPC)**

H02J
C25B

The present search report has been drawn up for all claims

| Place of search | Date of completion of the search | Examiner |
|---|---|---|
| Munich | 12 February 2025 | Ramcke, Ties |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 31 5430

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2025

| Patent document cited in search report | | Publication date | Patent family member(s) | | Publication date |
|---|---|---|---|---|---|
| EP 3656893 | A1 | 27-05-2020 | EP | 3656893 A1 | 27-05-2020 |
| | | | WO | 2018202926 A1 | 08-11-2018 |
| WO 2023213370 | A1 | 09-11-2023 | NONE | | |
| US 2010114395 | A1 | 06-05-2010 | CA | 2741129 A1 | 06-05-2010 |
| | | | CA | 2928768 A1 | 06-05-2010 |
| | | | CN | 102264950 A | 30-11-2011 |
| | | | EP | 2350352 A1 | 03-08-2011 |
| | | | EP | 3517653 A1 | 31-07-2019 |
| | | | ES | 2901112 T3 | 21-03-2022 |
| | | | PT | 3517653 T | 29-07-2021 |
| | | | US | 2010114395 A1 | 06-05-2010 |
| | | | US | 2012175952 A1 | 12-07-2012 |
| | | | US | 2012175954 A1 | 12-07-2012 |
| | | | WO | 2010048706 A1 | 06-05-2010 |
| US 2019343616 | A1 | 14-11-2019 | CA | 3100199 A1 | 21-11-2019 |
| | | | CN | 113164721 A | 23-07-2021 |
| | | | EP | 3810250 A1 | 28-04-2021 |
| | | | JP | 2021522949 A | 02-09-2021 |
| | | | US | 2019343616 A1 | 14-11-2019 |
| | | | WO | 2019222273 A1 | 21-11-2019 |